# EUROPÄISCHE PATENTSCHRIFT

(11) **EP 2 886 880 B1**
(45) Veröffentlichungstag und Bekanntmachung des Hinweises auf die Patenterteilung: **12.09.2018**
(21) Anmeldenummer: 14004245.8
(22) Anmeldetag: 16.12.2014
(51) Int. Cl.: F16B 12/04, A47B 88/423, A47B 88/467, A47B 88/463

(54) **Möbel**
Furniture
Meuble

(30) Priorität: 23.12.2013 DE 202013011557 U
(43) Veröffentlichungstag der Anmeldung: 24.06.2015
(73) Patentinhaber: Grass GmbH, 6973 Höchst (AT)
(72) Erfinder: Rihtarec, Filip, 6972 Fußach (AT); Karu, Felix, 6844 Altach (AT)
(74) Vertreter: Patentanwälte Magenbauer & Kollegen Partnerschaft mbB

(56) Entgegenhaltungen:
- DE-A1- 1 817 135
- DE-A1- 19 541 767
- US-A- 3 145 037
- US-A- 3 826 206
- US-B2- 6 991 397

## Beschreibung

Die Erfindung betrifft ein Möbel, mit wenigstens einer Metallkomponente und wenigstens einer Kunststoffkomponente, die aneinander befestigt sind.

In vielen Industriebranchen, beispielsweise in der Automobilindustrie, führt die Forderung nach Leichtbau und Wirtschaftlichkeit zur Entwicklung von Hybridbauteilen, bei denen zwei oder mehrere Werkstoffe kombiniert sind. Hybridbauteile haben Eigenschaften, die ein einzelner Werkstoff in der Regel nicht bieten kann.

Bei Kunststoff-Metall-Hybridstrukturen ist es bekannt, die Verbindung zwischen Kunststoff und Metall durch Anspritzen des Kunststoffs an das Metallblech im Spritzgießprozess (In-Mould Assembly, IMA) herzustellen.

Allerdings ist die Gestaltungsfreiheit bei der Herstellung solcher Kunststoff-Metall-Hybridbauteile begrenzt, da der Kunststoff an die Gestalt des zuvor gefertigten Metallteils anzupassen ist. Ferner ist auch das Spritzgießwerkzeug relativ aufwendig zu fertigen, was Kostenachteile mit sich bringt.

DE 195 41 767 A offenbart ein gattungsgemäßes Möbel.

Aufgabe der Erfindung ist es, ein Möbel der eingangs erwähnten Art zu schaffen, das in einfacher und kostengünstig herzustellenden Weise aus einem Verbund von Metall- und Kunststoffkomponenten aufgebaut ist.

Diese Aufgabe wird durch ein Möbel mit den Merkmalen des unabhängigen Anspruchs 1 gelöst. Weiterbildungen der Erfindung sind in den Unteransprüchen dargestellt.

Das erfindungsgemäße Möbel zeichnet sich dadurch aus, dass die Metallkomponente wenigstens einen Haltevorsprung aufweist, der zur Befestigung an der Kunststoffkomponente unter Bildung einer den Haltevorsprung aufnehmenden Haltevertiefung in das Material der Kunststoffkomponente eingepresst ist, wobei der Haltevorsprung als zylindrischer Haltekragen ausgebildet ist. Die Kunststoff-Möbelkomponente und die Metall-Möbelkomponente werden also getrennt voneinander hergestellt und danach miteinander verbunden. Durch die getrennte Herstellung der jeweiligen Möbelkomponenten ergibt sich eine deutlich höhere Gestaltungsfreiheit im Vergleich zur Herstellung des Verbundes mittels In-Mould Assembly. Bei der Herstellung der Kunststoff-Möbelkomponente kann das Spritzgießwerkzeug in der Regel relativ einfach gestaltet sein. Die Zykluszeit zur Herstellung eines Hybridbauteils, also einer Kunststoff-Metall-Hybridstruktur ist kürzer als beim In-Mould Assembly, wenn der Montagevorgang zur Verbindung der einzelnen Möbelkomponenten weniger Zeit als das Spritzgießen des Kunststoffteils erfordert. Ferner tritt der durch die Verarbeitungsschwindung des Kunststoffs beim In-Mould Assembly verursachte Verzug nicht auf. Das erfindungsgemäße Möbel ist also eine Hybridstruktur aus Metall-Möbelkomponenten und Kunststoff-Möbelkomponenten, die in einfacher Weise und kostengünstig hergestellt ist.

In besonders bevorzugter Weise ist die Metallkomponente als sich entlang einer Längsachse erstreckendes, insbesondere längliches Verbindungselement ausgebildet, das einen mit dem Haltevorsprung ausgestatteten Halteabschnitt und einen mit dem Halteabschnitt verbundenen Basisabschnitt aufweist, der mit einer weiteren Möbelkomponente koppelbar oder gekoppelt ist.

Das Verbindungselement kann beispielsweise nach Art eines Verbindungsbolzens ausgebildet sein.

Zweckmäßigerweise weist der Halteabschnitt des Verbindungselementes eine mit einer Anlagefläche ausgestattete Anlagepartie auf, die in Anlage an die zugeordnete Kunststoffkomponente gehalten ist, an die einerseits der Basisabschnitt insbesondere einstückig angesetzt und andererseits insbesondere einstückig der Haltevorsprung angeformt ist.

In besonders bevorzugter Weise ist der Haltevorsprung als hohlzylindrischer Haltekragen ausgebildet, der am Innen- und/oder Außenumfang wenigstens einen umlaufenden nach radial innen und/oder nach radial außen ausgerichteten nach Art eines Widerhakens ausgebildeten vorzugsweise ringförmigen Haltesteg zur Sicherung gegen Herausziehen besitzt.

Um das Verbindungselement in einfacher Weise in die Kunststoffkomponente einpressen zu können, ist an dessen freiem Ende eine spitz zulaufende Kragenwand mit einer Einführschräge ausgebildet.

Bei einer Weiterbildung der Erfindung ist wenigstens ein im Möbelkorpus des Möbels über eine Führungseinrichtung geführtes bewegbares Möbelteil vorgesehen, wobei die Führungseinrichtung wenigstens eine Führungseinheit aus wenigstens einer Laufschiene und einer am Möbelkorpus befestigbaren Korpusschiene aufweist, wobei die Metallkomponente von der Laufschiene und/oder Korpusschiene gebildet ist und wobei insbesondere der Haltevorsprung aus dem Material der Laufschiene und/oder Korpusschiene herausgeformt ist.

Bei einer Weiterbildung der Erfindung handelt es sich bei der wenigstens einen Kunststoffkomponente um eine insbesondere ein Kunststoffgehäuse aufweisende Einzugs- und/oder Auszugseinheit und/oder um ein Gleitlager, wobei vorzugsweise die Einzugseinheit und/oder Auszugseinheit an der Korpusschiene befestigt ist. Alternativ ist es möglich, dass die Metallkomponente eine Montageplatte ist, die beispielsweise am Boden eines Schubladenfachs montierbar ist. Bei der Kunststoffkomponente kann es sich dann um eine Einzugseinheit oder Auszugseinheit handeln, die auf die mit dem Haltevorsprung ausgestattete Montageplatte gepresst ist.

Es ist möglich, dass es sich bei der Kunststoffkomponente um ein Dämpfergehäuse eines Dämpfers handelt.

Bei einer Weiterbildung der Erfindung ist die Metallkomponente von einem Klappenbeschlag zur Bewegungssteuerung eines bewegbaren Möbelteils in Form einer Klappe gebildet, wobei vorzugsweise der Haltevorsprung aus dem Material des Beschlags herausgeformt ist.

Ferner ist es möglich, dass es sich bei den Metallkomponenten um einen Scharniertopf und/oder -arm handelt, wobei vorzugsweise der Haltevorsprung aus dem Material des Scharniertopfes und/oder -arms geformt ist.

Bevorzugte Ausführungsbeispiele der Erfindung sind in der Zeichnung dargestellt und werden im Folgenden näher erläutert. In der Zeichnung zeigen:
- Figur 1: eine schematische Darstellung eines ersten Ausführungsbeispiels des erfindungsgemäßen Möbels vor dem Verbinden einer Metall-Möbelkomponente mit einer Kunststoff-Möbelkomponente,
- Figur 2: das Möbel von Figur 1, wobei eine Kunststoff-Metall-Hybridstruktur aus Metall-Möbelkomponente und Kunstsoff-Möbelkomponente gebildet ist,
- Figur 3: eine schematische perspektivische Ansicht auf ein zweites Ausführungsbeispiel eines erfindungsgemäßen Möbels, bei dem die Metall-Möbelkomponente von einer Laufschiene und die Kunststoff-Möbelkomponente von einem Gleitlager gebildet sind und
- Figur 4: eine schematische perspektivische Darstellung der Metall-Möbelkomponente von Figur 3 mit daran ausgebildeten Haltevorsprung.

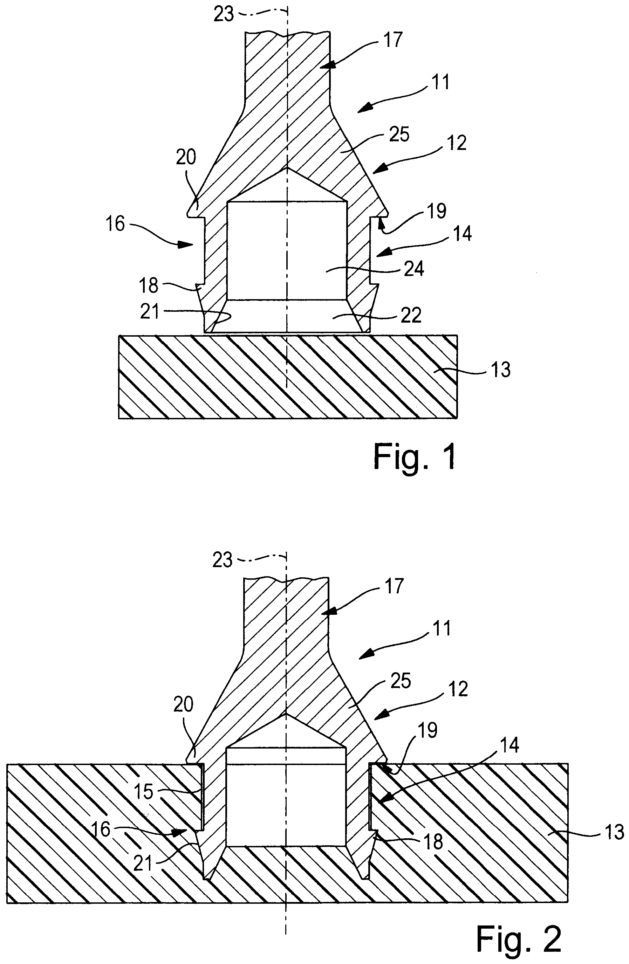

Die Figuren 1 und 2 zeigen ein erstes Ausführungsbeispiel des erfindungsgemäßen Möbels 11. Das Möbel 11 besitzt einen Möbelkorpus und ein daran beweglich gelagertes bewegbares Möbelteil (nicht dargestellt). Das bewegbare Möbelteil kann beispielsweise als Schublade ausgestaltet sein.

Im vorliegenden Fall wird eine Metallkomponente 12 mit einer Kunststoffkomponente 13 zu einer Kunststoff-Metall-Hybridstruktur verbunden. Im Beispielsfall handelt es sich bei der Kunststoffkomponente um ein aus Kunststoff bestehendes Seitenteil einer Schublade und bei der Metallkomponente 12 um ein längliches Verbindungselement in Form eines Verbindungsbolzens.

Die Metallkomponente 12 weist wenigstens einen Haltevorsprung 14 auf, der zur Befestigung an der Kunststoffkomponente 13 unter Bildung einer den Haltevorsprung 14 aufnehmenden Haltevertiefung 15 in das Material der Kunststoffkomponente 13 eingepresst ist.

Im vorliegend, gezeigten Beispielsfall befindet sich der Haltevorsprung 14 also am Verbindungsbolzen.

Der Verbindungsbolzen besitzt einen Halteabschnitt 16, an dem der Haltevorsprung 14 angeordnet ist und einen mit dem Halteabschnitt 16 insbesondere einstückig verbundenen Basisabschnitt 17. Am Basisabschnitt 17 des Verbindungsbolzens ist eine weitere Möbelkomponente angekoppelt oder ankoppelbar, beispielsweise ein Innenteiler (nicht dargestellt) zur Unterteilung der Schublade in einzelne Fächer.

Der Haltevorsprung 14 ist als hohlzylindrischer Haltekragen ausgebildet, der gemäß dem gezeigten Ausführungsbeispiel am Außenumfang einen umlaufenden nach radial außen ausgerichteten, ringförmigen Haltesteg 18 aufweist, der nach Art eines Widerhakens ausgebildet ist und zur Sicherung des Verbindungsbolzens gegen Herausziehen dient.

Ferner besitzt der Halteabschnitt eine mit einer Anlagefläche 19 ausgestattete Anlagepartie 20, die im Beispielsfall von einer am Übergang zwischen Haltevorsprung und Basisabschnitt 17 am Außenumfang umlaufenden ringförmigen Anlageschulter gebildet ist.

Der Haltekragen besitzt eine zu dessen freiem Ende spitz zulaufende Kragenwand mit Einführschräge 21, womit sich der Verbindungsbolzen leicht in das Kunststoffmaterial der Kunststoffkomponente 13, also im Beispielsfall das Seitenteil, einpressen lässt. Die Einführschräge 21 wird durch einen sich konisch erweiternden Innenabschnitt 22 gebildet, der in Axialrichtung längs einer Längsachse 23 des Verbindungsbolzens an den zylindrischen Innenraum 24 des Haltevorsprungs 14 anschließt.

Im Beispielsfall besitzt der Basisabschnitt 17 einen sich in Richtung des Halteabschnitts 16 konisch erweiternden Stützabschnitt 25, dessen stirnseitiges Ende die bereits erwähnte Anlageschulter bildet.

Der dem Halteabschnitt 16 abgewandte Teil des Basisabschnitts 17 ist stiftförmig zylindrisch ausgebildet.

Wie die Zusammenschau der Figuren 1 und 2 zeigt, wird der Verbindungsbolzen zunächst an das Kunststoff-Seitenteil angesetzt. Danach wird der Verbindungsbolzen mit einer Einpresskraft in das Material des Seitenteils eingepresst, wobei im Material des Seitenteils eine den Haltevorsprung aufnehmende Haltevertiefung 15 gebildet wird. Die ringförmige Anlageschulter gibt die Einpresstiefe vor, d.h. schlägt die Anschlagschulter an die Seitenwand des Seitenteils an, ist der Haltevorsprung 14 vollständig eingepresst. Der Einpressvorgang wird durch die bereits erwähnte Einführschräge 21 erleichtert. Der ringförmige Haltesteg 18 am Außenumfang des Haltevorsprungs 14 verhindert ein unbeabsichtigtes Herausziehen bzw. Lösen des Verbindungsbolzens vom Seitenteil.

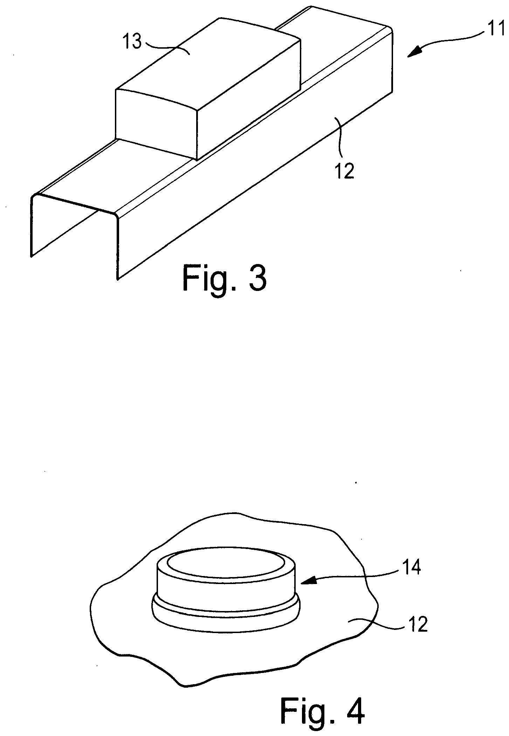

Die Figuren 3 und 4 zeigen ein zweites Ausführungsbeispiel des erfindungsgemäßen Möbels 11. Bei diesem Ausführungsbeispiel wird die Metallkomponente von einer Laufschiene gebildet, die Bestandteil einer Führungseinrichtung zur Führung eines bewegbaren Möbelteils, beispielsweise Schublade, im Möbel ist. Bei der Kunststoffkomponente 13 handelt es sich um ein ein Kunststoffgehäuse aufweisendes Gleitlager.

Wie insbesondere in Figur 4 gezeigt, ist an der Laufschiene ein nach außen abstehender Haltevorsprung 14 ausgebildet. Der Haltevorsprung 14 wird dadurch hergestellt, dass zunächst die Laufschiene mit einer Bohrung versehen wird, die dann mittels eines Stempels an dieser Stelle nach außen gedrückt wird, so dass ein Kragen entsteht. Das aus Kunststoffmaterial bestehende Gleitlager wird dann auf den Haltevorsprung 14 mittels Presskraft aufgepresst, wodurch ein Kunststoff-Metall-Hybridverbund entsteht.

## Patentansprüche

1. Möbel, mit wenigstens einer Metallkomponente (12) und wenigstens einer Kunststoffkomponente (13), die aneinander befestigt sind, wobei die Metallkomponente (12) wenigstens einen Haltevorsprung (14) aufweist, der zur Befestigung an der Kunststoffkomponente (13) unter Bildung einer den Haltevorsprung (14) aufnehmenden Haltevertiefung (15) in das Material der Kunststoffkomponente (13) eingepresst ist, wobei der Haltevorsprung (14) als zylindrischer Haltekragen ausgebildet ist.

2. Möbel nach Anspruch 1, **dadurch gekennzeichnet, dass** die Metallkomponente (12) als sich entlang einer Längsachse (23) erstreckendes insbesondere längliches Verbindungselement ausgebildet ist, das einen mit dem Haltevorsprung (14) ausgestatteten Halteabschnitt (16) und einen mit dem Halteabschnitt (16) verbundenen Basisabschnitt (17) aufweist, der mit einer weiteren Möbelkomponente koppelbar oder gekoppelt ist.

3. Möbel nach Anspruch 2, **dadurch gekennzeichnet, dass** das Verbindungselement nach Art eines Verbindungsbolzens ausgebildet ist.

4. Möbel nach Anspruch 2 oder 3, **dadurch gekennzeichnet, dass** der Halteabschnitt (16) des Verbindungselementes eine mit einer Anlagefläche (19) ausgestattete Anlagepartie (20) aufweist, die in Anlage an die zugeordnete Kunststoffkomponente (13) gehalten ist, an die einerseits der Basisabschnitt (17) insbesondere einstückig angesetzt und andererseits insbesondere einstückig der Haltevorsprung (14) angeformt ist.

5. Möbel nach Anspruch 4, **dadurch gekennzeichnet, dass** der Haltevorsprung (14) als hohlzylindrischer Haltekragen ausgebildet ist, der am Innen- und/oder Außenumfang wenigstens einen umlaufenden nach radial innen und/oder nach radial außen ausgerichteten nach Art eines Widerhakens ausgebildeten Haltesteg (18) zur Sicherung gegen Herausziehen besitzt.

6. Möbel nach Anspruch 5, **dadurch gekennzeichnet, dass** der Haltekragen eine zu dessen freiem Ende spitz zulaufende Kragenwand mit einer Einführschräge (21) aufweist.

7. Möbel nach Anspruch 1, **gekennzeichnet durch** wenigstens ein im Möbelkorpus des Möbels über eine Führungseinrichtung geführtes bewegbares Möbelteil, wobei die Führungseinrichtung wenigstens eine Führungseinheit aus wenigstens einer Laufschiene und einer am Möbelkorpus befestigbaren Korpusschiene aufweist, wobei die Metallkomponente (12) von der Laufschiene und/oder Korpusschiene gebildet ist und wobei insbesondere der Haltevorsprung (14) aus dem Material der Laufschiene und/oder Korpusschiene herausgeformt ist.

8. Möbel nach Anspruch 7, **dadurch gekennzeichnet, dass** es sich bei der wenigstens einen Kunststoffkomponente (13) um eine insbesondere ein Kunststoffgehäuse aufweisende Einzugs- und/ oder Auszugseinheit und/oder um ein Gleitlager handelt, wobei vorzugsweise die Einzugseinheit und/oder Auszugseinheit an der Korpusschiene befestigt ist.

## Claims

1. Piece of furniture with at least one metal component (12) and at least one plastic component (13) which are fastened to one another, wherein the metal component (12) has at least one retaining projection (14) which, for fastening to the plastic component (13), is pressed into the material of the plastic component (13) to form a retaining recess (15) holding the retaining projection (14), wherein the retaining projection (14) is in the form of a cylindrical retaining collar.

2. Piece of furniture according to claim 1, **characterised in that** the metal component (12) is in the form of a connecting element, in particular elongated, extending along a longitudinal axis (23) and having a retaining section (16) equipped with the retaining projection (14) and a base section (17) connected to the retaining section (16) and which is or may be connected to a further furniture component.

3. Piece of furniture according to claim 2, **characterised in that** the connecting element is in the form of a connecting pin.

4. Piece of furniture according to claim 2 or 3, **characterised in that** the retaining section (16) of the connecting element has a contact section (20) equipped with a contact surface (19), which is held in contact with the assigned plastic component (13), to which at one end the base section (17) is attached, in particular integrally, and at the other end the retaining projection (14) is moulded on, in particular integrally.

5. Piece of furniture according to claim 4, **characterised in that** the retaining projection (14) is in the form of a hollow-cylindrical retaining collar which has, on the inner and/or outer periphery, at least one continuous retaining bar (18), aligned radially inwards and/or radially outwards in the manner of a barb, to prevent pulling out.

6. Piece of furniture according to claim 5, **characterised in that** the retaining collar has a collar wall with a lead-in chamfer (21) and tapering towards its free end.

7. Piece of furniture according to claim 1, **characterised by** at least one movable furniture part guided in the furniture carcass of the furniture by a guiding device, wherein the guiding device has at least one guide unit comprising at least one running rail and one carcass rail which may be fastened to the furniture carcass, wherein the metal component (12) is formed by the running rail and/or carcass rail and wherein in particular the retaining projection (14) is formed out of the material of the running rail and/or carcass rail.

8. Piece of furniture according to claim 7, **characterised in that** the plastic component or components (13) involves or involve a pull-in and/or pull-out unit with in particular a plastic housing and/or a slide bearing, wherein preferably the pull-in and/or pull-out unit are or is fastened to the carcass rail.

## Revendications

1. Meuble avec au moins un composant métallique (12) et au moins un composant en plastique (13), qui sont fixés à l'autre, dans lequel le composant métallique (12) présente au moins une partie faisant saillie de maintien (14), qui est enfoncée dans le matériau du composant en plastique (13) pour la fixation au composant en plastique (13) en formant un renfoncement de maintien (15) recevant la partie faisant saillie de maintien (14), dans lequel la partie faisant saillie de maintien (14) est réalisée en tant que rebord de maintien cylindrique.

2. Meuble selon la revendication 1, **caractérisé en ce que** le composant métallique (12) est réalisé en tant qu'élément de liaison, en particulier allongé, s'étendant le long d'un axe longitudinal (23), qui présente une section de maintien (16) équipée de la partie faisant saillie de maintien (14) et une section de base (17) reliée à la section de maintien (16), qui peut être couplée ou est couplée à un autre composant de meuble.

3. Meuble selon la revendication 2, **caractérisé en ce que** l'élément de liaison est réalisé à la manière d'un boulon de liaison.

4. Meuble selon la revendication 2 ou 3, **caractérisé en ce que** la section de maintien (16) de l'élément de liaison présente une partie d'appui (20) équipée d'une surface d'appui (19), qui est maintenue en appui au niveau du composant en plastique (13) associé, au niveau duquel d'une part la section de base (17) est placée en particulier d'un seul tenant et d'autre part la partie faisant saillie de maintien (14) est formée en particulier d'un seul tenant.

5. Meuble selon la revendication 4, **caractérisé en ce que** la partie faisant saillie de maintien (14) est réalisée en tant que rebord de maintien cylindrique creux, qui possède au niveau de la périphérie intérieure et/ou extérieure au moins une entretoise de maintien (18) périphérique orientée vers l'intérieur radialement et/ou vers l'extérieur radialement, réalisée à la manière d'un picot servant au blocage pour empêcher toute sortie.

6. Meuble selon la revendication 5, **caractérisé en ce que** le rebord de maintien présente une paroi de rebord convergeant en pointe vers l'extrémité libre dudit rebord de maintien avec un biseau d'introduction (21).

7. Meuble selon la revendication 1, **caractérisé par** au moins une partie de meuble pouvant être déplacée dans le corps de meuble du meuble en étant guidée par l'intermédiaire d'un dispositif de guidage, dans lequel le dispositif de guidage présente au moins une unité de guidage composée d'au moins un rail de roulement et d'un rail de corps pouvant être fixé au corps de meuble, dans lequel le composant métallique (12) est formé par le rail de roulement et/ou le rail de corps et dans lequel en particulier la partie faisant saillie de maintien (14) est formée à partir du matériau du rail de roulement et/ou du rail de corps.

8. Meuble selon la revendication 7, **caractérisé en ce que** l'au moins un composant en plastique (13) est une unité d'entrée et/ou d'extraction présentant en particulier un boîtier en plastique et/ou un palier lisse, dans lequel de préférence l'unité d'entrée et/ou l'unité d'extraction sont fixées au rail de corps.
